# EUROPÄISCHE PATENTSCHRIFT

(11) **EP 4 211 583 B1**
(45) Veröffentlichungstag und Bekanntmachung des Hinweises auf die Patenterteilung: **08.07.2026**
(21) Anmeldenummer: 21745732.4
(22) Anmeldetag: 14.07.2021
(51) Int. Cl.: G06F 21/57, G06F 21/71, G06F 21/86, G06F 21/64

(54) **VERFAHREN ZUM BOOTEN EINER ELEKTRONISCHEN VORRICHTUNG**
METHOD FOR BOOTING AN ELECTRONIC DEVICE
PROCÉDÉ DE DÉMARRAGE D'UN DISPOSITIF ÉLECTRONIQUE

(30) Priorität: 10.09.2020 DE 102020211346
(43) Veröffentlichungstag der Anmeldung: 19.07.2023
(73) Patentinhaber: Robert Bosch GmbH, 70442 Stuttgart (DE)
(72) Erfinder: BOLZ, Peter, 71706 Markgroeningen (DE); TRITTLER, Stefan, 70839 Gerlingen (DE)
(86) Internationale Anmeldenummer: PCT/EP2021/069581
(87) Internationale Veröffentlichungsnummer: WO 2022/053205

(56) Entgegenhaltungen:
- US-A1- 2016 125 187
- US-A1- 2018 157 841
- US-A1- 2020 213 287
- RICHARD SOJA: "Automotive Security: From Standards to Implementation", 1 January 2014 (2014-01-01), XP055610904, Retrieved from the Internet <URL:https://www.nxp.com/docs/en/white-paper/AUTOSECURITYWP.pdf> [retrieved on 20190805]

## Beschreibung

Die Erfindung betrifft ein Verfahren zum Booten einer elektronischen Vorrichtung.

Die Erfindung betrifft ferner eine elektronische Vorrichtung. Die Erfindung betrifft ferner ein Computerprogrammprodukt.

### Stand der Technik

Elektronische Geräte sind zunehmend ungewollten böswilligen und gutwilligen Manipulationen ausgesetzt. Im Zuge der zunehmenden Vernetzung von elektronischen Geräten (vor allem über das Internet) haben diese Bedrohungen allerdings mittlerweile neue Dimensionen erreicht, wobei auch Datendiebstahl eine ernsthafte Bedrohung darstellen kann. Diese Thematik gilt für beliebige, vor allem untereinander vernetzte elektrische und elektronische Geräte (z.B. auch Internet der Dinge), mittlerweile auch stark für die Autoindustrie. Angriffe auf die genannten elektronischen Geräte mit dem Ziel der Manipulation haben insbesondere zum Ziel, Software und/oder Konfiguration der elektronischen Geräte zu verändern. Dabei können Konfigurationen in Datensätzen als auch durch ein Vorhandensein oder Nicht-Vorhandensein von Software ausgedrückt sein.

Es ist bekannt, dass moderne Mikrocontroller die Möglichkeit bieten, Bereiche des Programmspeichers (Flash) nach der Programmierung über Hardware-Mechanismen unveränderbar zu konfigurieren. Dies entspricht dem Verhalten eines einmal programmierbaren (engl. one-time-programmable, OTP) Speichers.

Bekannt ist auch die Möglichkeit, Programmspeicher (Flash) mit einem Hardware-Passwort derart zu schützen, dass der Programmspeicher nur bei vorheriger Eingabe des Hardware-Passworts umprogrammiert bzw. umgeflasht werden kann. Viele bekannte, neuere automotive Mikrocontroller verfügen über Programmspeicher (Flash) mit OTP und Hardware-Passwort Funktionalität zum Speicherschutz.

Bekannt ist ferner auch, dass Hardware-Passwörter Geräte-individuell vergeben werden können. Um Angriffe auf ganze Geräte-Serien zu erschweren, werden Hardware-Passwörter in der Regel Geräte-individuell vergeben und zwar derart, dass von einem Hardware-Passwort nicht auf ein anderes Hardware-Passwort der Geräte-Serie geschlossen werden kann, beispielsweise durch Anwendung von Zufallszahlen oder kryptographischen Key-Derivation-Funktionen.

Die Offenlegungsschrift US 2018/157841 A1 offenbart ein System und ein Verfahren zum sicheren Booten.

Das Dokument "Richard Soja: "Automotive Security: From Standards to Implementation", 1. Januar 2014 (2014-01-01), XP055610904" offenbart ein Standard aus der Automotive Sicherheit.

### Offenbarung der Erfindung

Es ist eine Aufgabe der vorliegenden Erfindung, ein verbessertes, insbesondere sichereres Verfahren zum Booten einer elektronischen Vorrichtung bereitzustellen.

Die Aufgabe wird gemäß einem ersten Aspekt gelöst mit einem Verfahren zum Booten einer elektronischen Vorrichtung, aufweisend die Schritte:
- Booten einer ersten gegen Manipulation gesicherten ersten Aktivierungseinrichtung; und
- zeitlich definiert überlappendes Booten von wenigstens einer weiteren gegen Manipulation gesicherten Aktivierungseinrichtung, die zum Aktivieren eines Computerprogrammprodukts der elektronischen Vorrichtung eingerichtet ist.

Auf diese Weise ist ein schneller und sicherer Bootvorgang der elektronischen Vorrichtung unterstützt. Erreicht wird dies dadurch, dass beide Aktivierungseinrichtungen auf sichere Weise gebootet werden können. Erreicht wird dies dadurch, dass für die beiden Aktivierungseinrichtungen jeweils ein paralleles sicheres Booten mittels Schreibschutz vorgesehen ist. Im Ergebnis ist dadurch eine "sichere Bootkette nach oben hin" unterstützt: Falls eines der weiteren Computerprogrammprodukte manipuliert wäre (verursacht z.B. durch einen Hackerangriff im Feld), würde dieser Umstand von der ersten bzw. zweiten Aktivierungseinrichtung erkannt werden, wodurch das erste bzw. zweite weitere Computerprogrammprodukt mittels der ersten bzw. zweiten Aktivierungseinrichtung nicht gebootet würde.

Vorteilhaft wird auf diese Weise sowohl eine Sicherheit gegen ungewolltes Aktiveren von ungewollt manipuliertem Programmcode bereitgestellt.

Im Ergebnis kann mit dem vorgeschlagenen Verfahren im Feldbetrieb somit eine ungewollte Manipulation von Programmcode verhindert werden. Vorteilhaft kann ein schnelles Booten der elektronischen Vorrichtung aus zwei sicheren Quellen in Form der beiden manipulationssicheren Aktivierungseinrichtungen durchgeführt werden. Unter "manipulationssicher" wird im Zusammenhang mit der vorliegenden Erfindung verstanden, dass Programmcode der beiden Aktivierungseinrichtungen nicht geändert werden kann.

Gemäß einem zweiten Aspekt wird die Aufgabe gelöst mit einer elektronischen Vorrichtung, aufweisend:
- eine erste gegen Manipulation gesicherte Aktivierungseinrichtung; und
- wenigstens eine weitere gegen Manipulation gesicherte Aktivierungseinrichtung, die zeitlich definiert überlappend zur ersten Aktivierungseinrichtung bootbar ist und die zum Aktivieren von wenigstens einem Computerprogrammprodukt der elektronischen Vorrichtung eingerichtet ist.

Die Aufgabe wird gemäß einem dritten Aspekt gelöst mit einem Computerprogramm mit Programmcodemitteln, das zur Durchführung des vorgeschlagenen Verfahrens eingerichtet ist, wenn es auf einer vorgeschlagenen elektronischen Vorrichtung abläuft oder auf einem computerlesbaren Datenträger gespeichert ist.

Vorteilhafte Weiterbildungen des vorgeschlagenen Verfahrens sind Gegenstand von abhängigen Ansprüchen.

Eine vorteilhafte Weiterbildung des Verfahrens sieht vor, dass das Booten der ersten Aktivierungseinrichtung und das Booten der zweiten Aktivierungseinrichtung gleichzeitig durchgeführt werden. Auf diese Weise wird ein besonders bevorzugter Überlappungsbereich des Bootens der beiden Aktivierungseinrichtungen realisiert. Vorteilhaft ist auf diese Weise ein möglichst zeiteffizientes Aktivieren der beiden Aktivierungseinrichtungen unterstützt.

Eine weitere vorteilhafte Weiterbildung des Verfahrens sieht vor, dass die zweite Aktivierungseinrichtung zum Prüfen des weiteren Computerprogrammprodukts eine Prüffunktionalität der ersten Aktivierungseinrichtung aufruft und wobei von der ersten Aktivierungseinrichtung die Prüffunktionalität für das Prüfen des Computerprogrammprodukts bereitgestellt wird. Vorteilhaft ist dadurch eine effiziente Überprüfung des weiteren Computerprogrammprodukts auf ungewollte Manipulation unterstützt.

Eine weitere vorteilhafte Weiterbildung der elektronischen Vorrichtung zeichnet sich dadurch aus, dass eine Manipulationssicherheit der zweiten Aktivierungseinrichtung mittels einer Hardware-Schutzeinrichtung bereitgestellt wird. Ein Zugriff der zweiten Aktivierungseinrichtung auf die Hardware-Schutzeinrichtung ist auf diese Weise nur mittels eines Hardware-Passworts möglich. Für das eigentliche Aktivieren des weiteren Computerprogrammprodukts ist dies auch gar nicht erforderlich, sondern nur für ein Umprogrammieren in der Fabrik. Beispielsweise kann das genannte Hardware-Passwort in einem Flash-Speicher der zweiten Aktivierungseinrichtung hinterlegt sein.

Vorteilhaft kann das Hardware-Passwort für jede elektronische Vorrichtung individuell bereitgestellt ist. Dies kann z.B. in IT-Trustcentern erfolgen, in denen für jede elektronische Vorrichtung geräte-individuell ein Passwort generiert und hinterlegt wird. Auf diese Weise ist ein maximaler Schutz aller elektronischen Vorrichtungen gegen ungewollte Manipulation von Software und/oder Daten unterstützt.

Eine weitere vorteilhafte Weiterbildung der elektronischen Vorrichtung zeichnet sich dadurch aus, dass die Manipulationssicherheit der zweiten Aktivierungseinrichtung mittels einer Einmalprogrammierung der zweiten Aktivierungseinrichtung bereitgestellt wird. Dadurch wird vorteilhaft eine alternative Manipulationssicherheit der zweiten Aktivierungseinrichtung bereitgestellt. Beispielsweise kann dies durch ein nicht wieder reparierbares Zerstören bzw. Durchbrennen von elektronischen Sicherungen realisiert sein.

Eine weitere vorteilhafte Weiterbildung der elektronischen Vorrichtung zeichnet sich dadurch aus, dass die erste Aktivierungseinrichtung ein Hardware Security Modul ist. Dieses zeichnet sich insbesondere dadurch aus, dass nur das Hardware-Security-Modul Zugriff auf seinen eigenen Flash Speicher hat, wodurch ein hohes Maß an Manipulationssicherheit unterstützt ist.

Eine weitere vorteilhafte Weiterbildung der elektronischen Vorrichtung zeichnet sich dadurch aus, dass für jede elektronische Vorrichtung ein individuelles Passwort für die Hardware-Schutzeinrichtung bereitgestellt ist. Vorteilhaft ist dadurch ein hohes Maß an Manipulationssicherheit für die elektronische Vorrichtung unterstützt.

Eine weitere vorteilhafte Weiterbildung der elektronischen Vorrichtung zeichnet sich dadurch aus, dass für eine Deaktivierung der Hardware-Schutzeinrichtung das Hardware-Passwort erforderlich ist. Vorteilhaft ist auch dadurch ein hohes Ausmaß an Manipulationssicherheit für die elektronische Vorrichtung unterstützt.

Eine weitere vorteilhafte Weiterbildung der elektronischen Vorrichtung zeichnet sich dadurch aus, dass die beiden Aktivierungseinrichtungen und die Computerprogrammprodukte auf demselben Chip angeordnet sind. Auf diese Weise ist für die elektronische Vorrichtung eine effizient operierende On-Chip-Lösung bereitgestellt.

Die Erfindung wird im Folgenden mit weiteren Merkmalen und Vorteilen anhand von zwei Figuren detailliert beschrieben. Die Figuren sind vor allem dazu gedacht, die erfindungswesentlichen Prinzipien zu verdeutlichen.

Offenbarte Verfahrensmerkmale ergeben sich analog aus entsprechenden offenbarten Vorrichtungsmerkmalen und umgekehrt. Dies bedeutet insbesondere, dass sich Merkmale, technische Vorteile und Ausführungen betreffend das vorgeschlagene Verfahren zum Booten einer elektronischen Vorrichtung in analoger Weise aus entsprechenden Ausführungen, Merkmalen und Vorteilen betreffend die elektronische Vorrichtung ergeben und umgekehrt.

In den Figuren zeigt:
- Fig. 1: ein prinzipielles Systemdiagramm mit einer Wirkungsweise der vorgeschlagenen Vorrichtung und des vorgeschlagenen Verfahrens; und
- Fig. 2: ein prinzipielles Ablaufdiagramm eines vorgeschlagenen Verfahrens zum Booten einer elektronischen Vorrichtung.

Beschreibung von Ausführungsformen

Eine Maßnahme gegen die oben genannten Manipulationen kann z.B. darin bestehen, vor dem Start von Software, diese auf Integrität und Authentizität zu überprüfen. Falls die Integrität und die Authentizität in Ordnung sind, wird die Software gestartet, andernfalls nicht. Wird diese Verfahren für Software ab dem Einschalten des Geräts für die erste gestartete Software und nachfolgend gestartete Software angewandt, dann spricht man von an sich bekanntem "Secure Boot" (= Sicheres Booten eines Geräts).

Die Zeitdauer für die Überprüfung von zu aktivierender Software auf Integrität und/oder Authentizität kann für viele Anwendungsfälle zu lang sein. Die Geräte-Funktion würde zu spät zur Verfügung stehen, auch im Falle eines unverhofften Neustarts. Deshalb gibt es auch das Verfahren, die Software nach dem Gerätestart zunächst einmal ohne Prüfung zu aktivieren und erst danach, parallel zur Laufzeit, eine Prüfung der Software durchzuführen. Wird eine Manipulation der Software erkannt, kann basierend auf dieser Information beim nächsten Gerätestart eine erneute Aktivierung der Software verhindert werden.

Dieses an sich bekannte Verfahren wird als "Authentic Boot" bezeichnet, wobei das Verfahren in einigen Varianten existiert. Secure Boot als auch Authentic Boot kann gestuft und gemischt angewandt werden, wobei bei Mischformen Authentic Boot auf Secure Boot folgen sollte und nicht umgekehrt.

Viele elektronische Geräte haben als zuerst nach Power-on gestartete Software einen Boot-Manager, der in Abhängigkeit von bestimmten Bedingungen die weiter zu startende Software auswählt und aktiviert. Die danach aktivierte Software kann wiederum Boot-Manager- oder Bootlader-Funktionalität haben oder funktional im Sinne einer eigentlichen Gerätefunktionalität sein. Boot-Manager sind oftmals sehr kleine und einfache Software-Einheiten, die auch schnell ausgeführt werden sollen.

Um Secure Boot für ein Gerät mit Software zu realisieren, muss das Booten des Geräts aus einer sicheren Quelle gestartet werden und sollte, wie oben beschrieben, vor Aktivierung von weiterer Software mit kryptographischen Mitteln zuerst überprüft werden. Die kryptographische Überprüfung einer zu startenden Software kann ein Boot-manager selbsttätig durchführen, wenn die nötige Information über die anzuspringende Software zur Verfügung steht (z.B. belegter Adressbereich und Information über die zur Verfügung stehenden Referenz-Checkdaten, wobei der Bootmanager auch Dienste des Hardware Security Moduls (siehe dazu weiter unten) verwenden kann).

Für eine sichere, d.h. eine nicht bzw. nur sehr schwer manipulierbare bzw. angreifbare Speicherung von Sicherheitsmaterial, um z.B. vor Manipulation geschützte digitale Root-Zertifikate und/oder effektive Root-Zertifikate, öffentliche Schlüssel, geheime Schlüssel, sonstige geheime Daten sicher speichern, verarbeiten und versenden zu können, sind sogenannte Hardware-Security-Module (HSM) bekannt, z.B. aus Klaus Schmeh, Kryptographie (Verfahren, Protokolle, Infrastrukturen), dpunkt Verlag, 6. Auflage, April 2016.

Bei einigen aktuellen Microcontroller-Familien wird ein sogenanntes Hardware Security Modul verwendet, das als eine On-chip-Einheit mit eigenem Prozessor, eigenen exklusiven Speicherbereichen für ausführbaren Programmcode (gespeichert in einem Programm-Flash), nicht-flüchtige Daten (gespeichert z.B. in einem Daten-Flash), Code und flüchtige Daten (z.B. RAM), Hardware-Beschleuniger für kryptographische Algorithmen, usw. realisiert ist. Das Hardware- Security-Modul ist als ein On-chip Co-Prozessor zum Hauptprozessor ausgebildet. Der normalerweise größere Hauptprozessor und dessen On-chip Umgebung werden nachfolgend "Host" genannt. Der Host beherbergt somit auch das kleinere Hardware Security Modul auf dem gleichen Chip.

Bekannt sind Secure Boot-Funktionalitäten, die mit einem bzw. basierend auf einem Hardware-Security-Modul realisiert sind. Dabei wird vor der Verwendung in einer Anlernphase z.B. ein kryptographischer Hash im Hardware-Security-Modul über die zu schützende Software berechnet und sicher im Hardware-Security-Modul gespeichert. Während der Secure Boot Phase wird der Hash für die Überprüfung der Software verwendet.

Als Ausgangspunkt für Secure Boot des Hardware-Security-Moduls selbst, ist ein Teil der Hardware-Security-Modul-Software, als Software im Co-Prozessor Hardware Security Modul, als sogenannte "sichere Anker-Software" definiert. Bei Secure Boot startet diese Anker-Software des Hardware-Security-Moduls nach Power-On und aktiviert dann weitere Hardware-Security-Modul-Software mit entsprechender Secure Boot Überprüfung, danach weitere Software außerhalb des Hardware-Security-Moduls, mit Secure Boot oder Authentic Boot Überprüfung.

Ein Secure Boot-Vorgang, bei dem zuerst das Hardware-Security-Modul selbst und danach der Host-Bootmanager geprüft werden, dauert auf Grund des sequentiellen Vorgehens länger als ein paralleles Booten beider Prozessoren.

Vorgeschlagen wird, den Host Bootmanager sofort nach dem Einschalten zu starten. Im Ergebnis kann dadurch bis zur Verfügbarkeit des Systems wertvolle Zeit gewonnen werden, z.B. wenige bis einige zig Millisekunden. Vorgeschlagen wird eine Verwendung von Hardware-Speicherschutz mit einem Hardware-Passwort für den Programmcode des Host-Bootmanagers, um den Host-Bootmanager als vertrauenswürdige Quelle (engl. Root-of-Trust) für einen Secure Boot- oder einen Authentic Boot-Vorgang auf dem Host zu realisieren und dennoch flexibel bezüglich Umprogrammierung zu bleiben. Dabei kann der Host-Bootmanager booten, ohne dass er dafür "eine Erlaubnis" des Hardware-Security-Moduls benötigt. Im Ergebnis können auf diese Weise der Host-Bootmanager und das Hardware-Security-Modul parallel booten, was im Ergebnis wertvollen Zeitgewinn im Bootprozess bringen kann.

Dadurch ist das Hardware-Passwort zum Aufheben des Hardware-Schutzes für den Host-Bootmanager zwar der Chip-Hardware bekannt (und in dieser als Vergleichswert für empfangene Daten zum Aufheben des Hardware-Schutzes gespeichert), nicht jedoch der Software auf dem Chip, d.h. weder der Software auf dem Host noch der Software auf dem Hardware Security Module. Eine erforderliche bzw. gewollte Umprogrammierung der Hardware des Host-Bootmanagers wird im Bedarfsfall (z.B. in der Fabrik, IT-Trustcenter, usw.) durch Bereitstellung des Hardware-Passwortes ermöglicht. Im Ergebnis ist dadurch ein schnelles Booten des Hosts ohne Secure Boot durch das Hardware Security Module unterstützt, wobei ein sicherer Root-of-Trust für ein sicheres Booten bzw. Aktivieren der Host-Software bereitgestellt wird.

Das Hardware-Passwort kann vom Geräte-Hersteller z.B. jeweils Geräte-individuell vergeben werden, wobei es während der Gerätefertigung in die Hardware des Chips eingebracht und aktiviert wird und in einer gesicherten IT-Infrastruktur (z.B. IT-Trustcenter) außerhalb des neu gefertigten Gerätes zusammen mit Geräte-Identifikationsdaten gespeichert sein kann.

Um den Hardware-Schutz für den Host-Boot Manager zu deaktivieren, muss vor einem Umprogrammiervorgang zuerst das Hardware-Passwort an die Hardware des Host-Bootmanagers übermittelt werden. Das Hardware-Passwort erhält die Geräte-extern angeordnete Umprogramiereinrichtung erst nach Authentifizierung gegenüber der sicheren IT-Infrastruktur von derselben, was z.B. im Werk der Geräte-Fertigung erfolgen kann.

Somit steht einer gewollten und zulässigen Umprogrammierung von Geräten während der Fertigung, auf Halde liegend (halbfertig oder bereits fertig zur Auslieferung), die aber noch einmal umprogrammiert werden müssen, um neuere Funktionen einzuspielen (in diesem Fall für den Host-Bootmanager), oder für Rückläufergeräte, die zum Zwecke einer Analyse umprogrammiert werden, oder für Qualitätschecks entnommene Geräte nichts im Wege.

Um eine Umprogrammierung des Host Bootmanagers im Feld zu ermöglichen, muss das Steuergeräte-individuelle Passwort dem Erstausrüster (engl. Original Equipment Manufacturer, OEM) bekannt sein und dieser muss es bei einer Umprogrammierung des Host-Bootmanagers verwenden. Dazu sollten sinnvollerweise die Hardware-Passwörter einer Serie gesicherter M2M (engl. Machine-to-Machine) Schnittstellen vom Gerätehersteller-Trustcenter zum OEM-Trustcenter gelangen, der sie dann bei der Umprogrammierung auch Steuergeräte-individuell an die Tester in den Werkstätten weiterleitet.

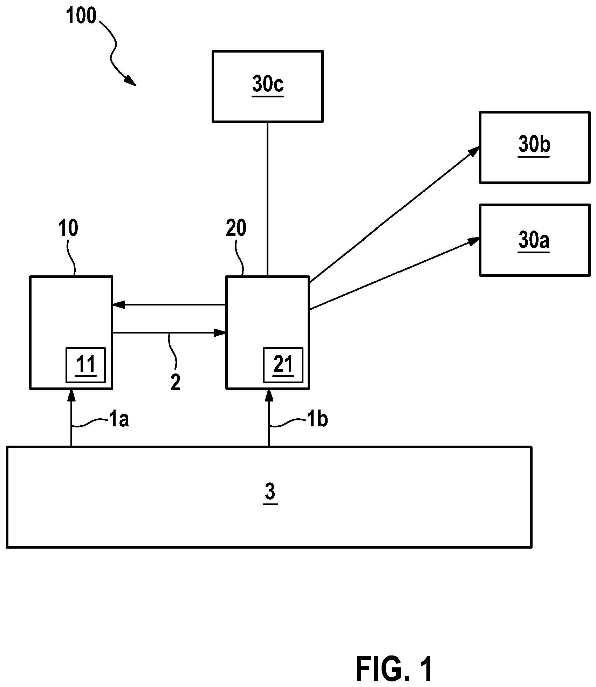

Fig. 1 zeigt ein prinzipielles Systemdiagramm mit einer Wirkungsweise des vorgeschlagenen Verfahrens und der vorgeschlagenen elektronischen Vorrichtung 100.

Man erkennt die elektronische Vorrichtung 100 mit einer Hardwareeinheit 3, z.B. in Form eines Mikrocontrollers. Ferner umfasst die elektronische Vorrichtung 100 eine erste Aktivierungseinrichtung 10 in Form eines Hardware-Security-Moduls und eine zweite Aktivierungseinrichtung 20 in Form eines Host-Bootmanagers. Die erste Aktivierungseinrichtung 10 ist gegen Manipulation gesichert, z.B. mittels einer Hardware-schutzeinrichtung 11, die in der Regel im Rahmen einer Microcontroller-Implementierung der ersten Aktivierungseinrichtung 10 schon vorhanden ist. Ferner erkennt man weitere Computerprogrammprodukte 30a... 30c, die mittels der zweiten Aktivierungseinrichtung 20 aktiviert werden und die nach erfolgtem Aktivieren auf der Hardwareeinheit 3 ablaufen.

In einem Schritt 1a wird ein Booten bzw. Aktivieren der ersten Aktivierungseinrichtung 10 mittels ihres Bootbereichs durchgeführt. Ein Bootbereich (nicht dargestellt) der ersten Aktivierungseinrichtung 10 ist mittels einer Hardwareschutzeinrichtung 11 gegen Manipulation geschützt. Im Ergebnis ist daher das Booten der ersten Aktivierungseinrichtung 10 sicher im Sinne eines "Root-of-Trust".

Zeitlich definiert überlappend, vorzugsweise gleichzeitig mit dem Aktivieren der ersten Aktivierungseinrichtung 10 in Schritt 1a erfolgt in einem Schritt 1b ein Booten der zweiten Aktivierungseinrichtung 20, deren Hardware (z.B. ein Flash-Speicher) mittels einer Hardware-Schutzeinrichtung 21 geschützt ist, sodass ein Umprogrammieren der Hardware der zweiten Aktivierungseinrichtung 20 ohne die Hardware-Schutzeinrichtung 21 nicht möglich ist. Vorzugsweise ist für eine Deaktivierung einer Schutzfunktion der Hardware-Schutzeinrichtung 21 ein Hardware-Passwort erforderlich. Alternativ kann die Manipulationssicherheit der zweiten Aktivierungseinrichtung 20 durch ein einmaliges Programmieren der Hardware der zweiten Aktivierungseinrichtung 20 bereitgestellt sein, wobei allerdings im letzteren Fall eine Umprogrammierungsmöglichkeit der zweiten Aktivierungseinrichtung 20 ausgeschlossen ist.

Die erste Aktivierungseinrichtung 10 ist vorgesehen, ein weiteres Computerprogrammprodukt (nicht dargestellt) zu aktivieren. Dieses weitere Computerprogrammprodukt kann auch ein Teil der ersten Aktivierungseinrichtung 10 sein. Die zweite Aktivierungseinrichtung 20 ist vorgesehen, ein weiteres Computerprogrammprodukt 30a... 30c zu aktivieren. Im Ergebnis ist somit mittels der beiden Aktivierungseinrichtungen 10, 20 eine definierte, manipulationssichere Aktivierungskette unterstützt, die beide jeweils einen vertrauenswürdigen Root-of-Trust aufweisen, wodurch ein Aktivieren von ungewollt manipulierten Computerprogrammprodukten 11, 30a...30c weitestgehend unterbunden ist.

Im Zuge des parallelen Bootens der Aktivierungseinrichtungen 10, 20 erfolgt auf Anfrage der zweiten Aktivierungseinrichtung 20 an die erste Aktivierungseinrichtung 10 hin eine Nutzung 2 einer Prüffunktionalität bzw. Verifikationsdienste der ersten Aktivierungseinrichtung 10 durch die zweite Aktivierungseinrichtung 20. Dadurch wird von der ersten Aktivierungseinrichtung 10 ein Prüfen des weiteren Computerprogrammprodukts 30a, 30b, 30c auf Integrität vor deren Verwendung durchgeführt, woraufhin von der zweiten Aktivierungseinrichtung 20 eines der weiteren Computerprogrammprodukte 30a, 30b, 30c aktiviert bzw. gebootet wird. Dabei erfolgt entweder ein Aktivieren bzw. Booten des Computerprogrammprodukts 30a, oder des Computerprogrammprodukts 30b oder des Computerprogrammprodukts 30c.

Alle genannten Boot-Vorgänge können entweder mittels an sich bekannten Secure Boot- oder an sich bekannten Authentic Boot Prozesses oder mittels einer Mischform der genannten Prozesse durchgeführt werden. Falls im Zuge dieser Prüfung festgestellt wird, dass eines der weiteren Computerprogrammprodukte 30a, 30b, 30c ungewollt manipuliert ist, wird ein Aktivieren des ungewollt manipulierten Computerprogrammprodukts 30a, 30b, 30c durch die zweite Aktivierungseinrichtung 20 nicht durchgeführt.

Im Ergebnis ist auf diese Weise somit ein schnelles und sicheres Hochfahren bzw. Booten der elektronischen Vorrichtung 100 (z.B. in Form eines elektronischen Steuergeräts eines Kraftfahrzeugs) möglich. Beispielsweise kann das elektronische Steuergerät ein Radarsteuergerät eines Kraftfahrzeugs sein.

Vorteilhaft wird aufgrund der Manipulationssicherheit der beiden Aktivierungseinrichtungen 10, 20 auch ein effizienter Schutz gegenüber aktiver ungewollter Manipulation der elektronischen Vorrichtung 100 im Feldbetrieb bereitgestellt.

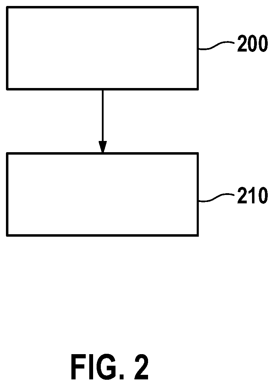

Obwohl vorgehend das vorgeschlagene Verfahren mit zwei Aktivierungseinrichtungen 10, 20 offenbart ist, versteht es sich von selbst, dass das vorgeschlagene Verfahren auch mit mehr als zwei Aktivierungseinrichtungen durchgeführt werden kann. Fig. 2 zeigt einen prinzipiellen Ablauf eines vorgeschlagenen Verfahrens zum Booten einer elektronischen Vorrichtung 100.

In einem Schritt 200 erfolgt ein Booten einer ersten gegen Manipulation gesicherten ersten Aktivierungseinrichtung 10.

In einem Schritt 210 erfolgt ein zeitlich definiert überlappendes Booten von wenigstens einer weiteren gegen Manipulation gesicherten Aktivierungseinrichtung 20, die zum Aktivieren eines Computerprogrammprodukts 30a...30c der elektronischen Vorrichtung 100 eingerichtet ist.

Die beiden Verfahrensschritte 200, 210 werden somit zeitlich definiert überlappend, vorzugsweise zeitgleich bzw. gleichzeitig bzw. parallel ausgeführt.

Vorteilhaft kann das vorgeschlagene Verfahren in Form eines Softwareprogramms mit geeigneten Programmcodemitteln für die elektronische Vorrichtung 100 realisiert werden. Eine einfache Adaptierbarkeit des Verfahrens ist auf diese Weise unterstützt.

Vorteilhaft kann die elektronische Vorrichtung 100 für ein elektronisches Steuergerät, insbesondere im Automobilbereich verwendet werden, wobei das elektronische Steuergerät einen Mikrocontroller mit einem programmierbaren Programmspeicher aufweist.

Der Fachmann wird die Merkmale der Erfindung somit in geeigneter Weise abändern und/oder miteinander kombinieren, ohne vom Kern der Erfindung abzuweichen.

## Patentansprüche

1. Verfahren zum Booten einer elektronischen Vorrichtung (100) mit den Schritten:
- Booten einer mittels einer ersten Hardwareschutzeinrichtung (11) gegen Manipulation gesicherten ersten Aktivierungseinrichtung (10) der elektronischen Vorrichtung (100); und
- zeitlich definiert überlappendes Booten von wenigstens einer weiteren mittels einer zweiten Hardwareschutzeinrichtung (21) gegen Manipulation gesicherten Aktivierungseinrichtung (20) der elektronischen Vorrichtung (100), wobei mittels der wenigstens einen weiteren Aktivierungseinrichtung (20) ein nach erfolgtem Booten der zweiten Aktivierungseinrichtung nachfolgendes sicheres Aktivieren eines Computerprogrammprodukts (30a... 30c) der elektronischen Vorrichtung (100) durchgeführt wird,
- wobei die zweite Aktivierungseinrichtung (20) zum Prüfen des weiteren Computerprogrammprodukts (30a... 30c) eine Prüffunktionalität der ersten Aktivierungseinrichtung (10) aufruft und wobei von der ersten Aktivierungseinrichtung (10) die Prüffunktionalität für das Prüfen des Computerprogrammprodukts (30a... 30c) bereitgestellt wird.

2. Verfahren nach Anspruch 1, wobei das Booten der ersten Aktivierungseinrichtung (10) und das Booten der zweiten Aktivierungseinrichtung (20) gleichzeitig durchgeführt werden.

3. Elektronische Vorrichtung (100), aufweisend:
- eine mittels einer ersten Hardwareschutzeinrichtung (11) gegen Manipulation gesicherte erste Aktivierungseinrichtung (10); und
- wenigstens eine weitere mittels einer zweiten Hardwareschutzeinrichtung (21) gegen Manipulation gesicherte Aktivierungseinrichtung (20), die zeitlich definiert überlappend zur ersten Aktivierungseinrichtung (10) bootbar ist und die zum Aktivieren von wenigstens einem Computerprogrammprodukt (30a...30c) der elektronischen Vorrichtung (100) eingerichtet ist, wobei eine Manipulationssicherheit der zweiten Aktivierungseinrichtung (20) mittels der zweiten Hardware-Schutzeinrichtung (21) bereitstellbar ist, wobei nach erfolgtem Booten der wenigstens einen weiteren Aktivierungseinrichtung (20) ein nachfolgendes sicheres Aktivieren eines Computerprogrammprodukts (30a...30c) der elektronischen Vorrichtung (100) durchführbar ist,
- wobei die zweite Aktivierungseinrichtung (20) zum Prüfen des weiteren Computerprogrammprodukts (30a... 30c) eine Prüffunktionalität der ersten Aktivierungseinrichtung (10) aufruft und wobei von der ersten Aktivierungseinrichtung (10) die Prüffunktionalität für das Prüfen des Computerprogrammprodukts (30a... 30c) bereitgestellt wird.

4. Elektronische Vorrichtung (100) nach Anspruch 3, **dadurch gekennzeichnet, dass** die Manipulationssicherheit der zweiten Aktivierungseinrichtung (20) mittels einer Einmalprogrammierung der zweiten Aktivierungseinrichtung (20) bereitgestellt wird.

5. Elektronische Vorrichtung (100) nach Anspruch 3 oder 4, **dadurch gekennzeichnet, dass** die erste Aktivierungseinrichtung (10) ein Hardware Security Modul ist.

6. Elektronische Vorrichtung (100) nach einem der Ansprüche 3 bis 5, **dadurch gekennzeichnet, dass** für jede elektronische Vorrichtung (100) ein individuelles Passwort für die Hardware-Schutzeinrichtung (21) bereitgestellt ist.

7. Elektronische Vorrichtung (100) nach Anspruch 6, **dadurch gekennzeichnet, dass** für eine Deaktivierung der Hardware-Schutzeinrichtung (21) das Hardware-Passwort erforderlich ist.

8. Elektronische Vorrichtung (100) nach einem der Ansprüche 3 bis 7, **dadurch gekennzeichnet, dass** die beiden Aktivierungseinrichtungen (10, 20) und die Computerprogrammprodukte (11, 30a... 30c) auf demselben Chip angeordnet sind.

9. Verwendung einer elektronischen Vorrichtung (100) nach einem der Ansprüche 3 bis 8 zum Betreiben eines elektronischen Steuergeräts im Automobilbereich.

10. Computerprogramm mit Programmcodemitteln eingerichtet zur Durchführung des Verfahrens nach Anspruch 1 oder 2, wenn es auf einer elektronischen Vorrichtung (100) nach einem der Ansprüche 3 bis 9 abläuft oder auf einem computerlesbaren Datenträger gespeichert ist.

## Claims

1. Method for booting an electronic apparatus (100), comprising the steps of:
- booting a first activation device (10) of the electronic apparatus (100), which device is protected against tampering by means of a first hardware protection device (11); and
- booting, in a temporally defined overlapping manner, at least one further activation device (20) of the electronic apparatus (100), which device is protected against tampering by means of a second hardware protection device (21), wherein, once the second activation device has been booted, subsequent safe activation of a computer program product (30a...30c) of the electronic apparatus (100) is carried out by means of the at least one further activation device (20),
- wherein the second activation device (20) requests a test functionality from the first activation device (10) in order to test the further computer program product (30a...30c) and wherein the test functionality for testing the computer program product (30a...30c) is provided by the first activation device (10).

2. Method according to Claim 1, wherein the booting of the first activation device (10) and the booting of the second activation device (20) are carried out simultaneously.

3. Electronic apparatus (100), comprising:
- a first activation device (10) protected against tampering by means of a first hardware protection device (11); and
- at least one further activation device (20) protected against tampering by means of a second hardware protection device (21), which further activation device is able to be booted in a temporally defined manner overlapping with the first activation device (10) and is set up to activate at least one computer program product (30a...30c) of the electronic apparatus (100), wherein tamper protection of the second activation device (20) is able to be provided by means of the second hardware protection device (21), wherein, once the at least one further activation device (20) has been booted, subsequent safe activation of a computer program product (30a...30c) of the electronic apparatus (100) is able to be carried out,
- wherein the second activation device (20) requests a test functionality from the first activation device (10) in order to test the further computer program product (30a...30c) and wherein the test functionality for testing the computer program product (30a...30c) is provided by the first activation device (10).

4. Electronic apparatus (100) according to Claim 3, **characterized in that** the tamper protection of the second activation device (20) is provided by means of a one-time programming of the second activation device (20).

5. Electronic apparatus (100) according to Claim 3 or 4, **characterized in that** the first activation device (10) is a hardware security module.

6. Electronic apparatus (100) according to one of Claims 3 to 5, **characterized in that**, for each electronic apparatus (100), an individual password is provided for the hardware protection device (21).

7. Electronic apparatus (100) according to Claim 6, **characterized in that** the hardware password is required for deactivation of the hardware protection device (21).

8. Electronic apparatus (100) according to one of Claims 3 to 7, **characterized in that** the two activation devices (10, 20) and the computer program products (11, 30a...30c) are arranged on the same chip.

9. Use of an electronic apparatus (100) according to one of Claims 3 to 8 for operating an electronic control unit in the automotive sector.

10. Computer program comprising program code means, configured to carry out the method according to Claim 1 or 2 when it runs on an electronic apparatus (100) according to one of Claims 3 to 9 or is stored on a computer-readable data carrier.

## Revendications

1. Procédé d'amorçage d'un dispositif électronique (100), comprenant les étapes suivantes :
- amorcer un premier appareil d'activation (10) du dispositif électronique (100) protégé contre toute manipulation au moyen d'un premier appareil de protection matérielle (11) ; et
- amorcer, avec un chevauchement défini dans le temps, au moins un autre appareil d'activation (20) du dispositif électronique (100) protégé contre toute manipulation au moyen d'un deuxième appareil de protection matérielle (21), dans lequel une activation sécurisée d'un produit programme informatique (30a...30c) du dispositif électronique (100) consécutive à l'amorçage réussi du deuxième appareil d'activation est effectuée au moyen dudit au moins un autre appareil d'activation (20),
- dans lequel le deuxième appareil d'activation (20) appelle une fonctionnalité de vérification du premier appareil d'activation (10) pour vérifier l'autre produit programme informatique (30a...30c), et dans lequel la fonctionnalité de vérification destinée à vérifier le produit programme informatique (30a...30c) est fournie par le premier appareil d'activation (10).

2. Procédé selon la revendication 1, dans lequel l'amorçage du premier appareil d'activation (10) et l'amorçage du deuxième appareil d'activation (20) sont effectués simultanément.

3. Dispositif électronique (100), comportant :
- un premier appareil d'activation (10) protégé contre toute manipulation au moyen d'un premier appareil de protection matérielle (11) ; et
- au moins un autre appareil d'activation (20) protégé contre toute manipulation au moyen d'un deuxième appareil de protection matérielle (21), qui peut être amorcé avec un chevauchement défini dans le temps par rapport au premier appareil d'activation (10) et qui est conçu pour activer au moins un produit programme informatique (30a...30c) du dispositif électronique (100), dans lequel une sécurité contre toute manipulation du deuxième appareil d'activation (20) peut être assurée au moyen du deuxième appareil de protection matérielle (21), dans lequel une activation sécurisée consécutive d'un produit programme informatique (30a...30c) du dispositif électronique (100) peut être effectuée après l'amorçage réussi dudit au moins un autre appareil d'activation (20),
- dans lequel le deuxième appareil d'activation (20) appelle une fonctionnalité de vérification du premier appareil d'activation (10) pour vérifier l'autre produit programme informatique (30a...30c), et dans lequel la fonctionnalité de vérification destinée à vérifier le produit programme informatique (30a...30c) est fournie par le premier appareil d'activation (10).

4. Dispositif électronique (100) selon la revendication 3, **caractérisé en ce que** la sécurité contre toute manipulation du deuxième appareil d'activation (20) est assurée au moyen d'une programmation unique du deuxième appareil d'activation (20).

5. Dispositif électronique (100) selon la revendication 3 ou 4, **caractérisé en ce que** le premier appareil d'activation (10) est un module de sécurité matériel.

6. Dispositif électronique (100) selon l'une quelconque des revendications 3 à 5, **caractérisé en ce que**, pour chaque dispositif électronique (100), il est prévu un mot de passe individuel pour l'appareil de protection matérielle (21).

7. Dispositif électronique (100) selon la revendication 6, **caractérisé en ce que** le mot de passe matériel est requis pour une désactivation du dispositif de protection matérielle (21).

8. Dispositif électronique (100) selon l'une quelconque des revendications 3 à 7, **caractérisé en ce que** les deux appareils d'activation (10, 20) et les produits programmes informatiques (11, 30a...30c) sont disposés sur la même puce.

9. Utilisation d'un dispositif électronique (100) selon l'une quelconque des revendications 3 à 8 pour faire fonctionner un appareil de commande électronique dans le secteur automobile.

10. Programme informatique comprenant des moyens de code de programme conçus pour la mise en œuvre du procédé selon la revendication 1 ou 2, lorsqu'il s'exécute sur un élément dispositif électronique (100) selon l'une quelconque des revendications 3 à 9, ou sur un support de données lisible par ordinateur.
